# EUROPÄISCHE PATENTANMELDUNG

(11) **EP 2 175 552 A1**
(43) Veröffentlichungstag der Anmeldung: **14.04.2010**
(21) Anmeldenummer: 08017838.7
(22) Anmeldetag: 10.10.2008
(51) Int. Cl.: H02P 3/22, H02H 7/08

(54) **Verfahren zum Betrieb einer Antriebseinrichtung und Antriebseinrichtung zur Ausführung des Verfahren**

(71) Anmelder: Siemens Aktiengesellschaft, 80333 München (DE)
(72) Erfinder: Schwesig, Günter, 91054 Erlangen (DE); Walders, Hanno, 91056 Erlangen (DE)

(57) **Zusammenfassung**

Die Erfindung betrifft ein Verfahren zum Betrieb einer Antriebseinrichtung (10) und eine nach dem Verfahren arbeitende Antriebseinrichtung (10), wobei ein Motor (12), insbesondere ein Drehstrommotor, zum Heben einer Last (14) über einen Wechselrichter (20), der in einer Brückenschaltung obere und untere Transistoren (22-32) umfasst, angesteuert wird, wobei vorgesehen ist, dass bei einer Unterbrechung der Versorgungsspannung der Antriebseinrichtung (10) der Motor (12) durch eine Bewegung der Last gedreht wird, wobei eine Rückspeisespannung (102) erzeugt wird, welche in die Antriebseinrichtung (10) rückgespeist wird und mit der die unteren Transistoren (28-32) eingeschaltet werden, wobei beim Einschalten der unteren Transistoren (28-32) ein Ankerkurzschluss ausgelöst wird.
Wobei als Rückspeisespannung (102) eine dreiphasige Wechselspannung gleichgerichtet und in einen Zwischenkreis (94) der Antriebseinrichtung (10) rückgespeist und einem darin angeordneten Hochsetzsteller (104) zum Einschalten der unteren Transistoren (28,30,32) zugeführt wird.

## Beschreibung

Die Erfindung betrifft ein Verfahren zum Betrieb einer Antriebseinrichtung gemäß dem Oberbegriff des Anspruchs 1. Sie betrifft weiterhin eine Vorrichtung zur Durchführung des Verfahrens.

Derartige Verfahren sind allgemein bekannt. Dabei gibt es bei Antriebseinrichtungen Maschinenteile wie z. B. ein Schrägbett bei einer Drehmaschine oder bei Robotern, Aufzügen, Kränen usw., die auch als hängende Last bezeichnet werden und bei denen von der Antriebseinrichtung ein Gegenmoment zu dem auf die Maschinenteile wirkenden Gravitationsmoment aufgebracht werden muss. Bei einem Ausfall der Antriebseinrichtung oder bei Auftreten eines Fehlers in der Antriebseinrichtung kann das Gegenmoment nicht aufgebracht werden, so dass das entsprechende Maschinenteil herunterfallen und dabei ggf. Schaden an Mensch und Maschine verursachen kann. Daher werden zum Schutz oft mechanische Bremsen eingesetzt, die bei Auftreten eines Fehlers und/oder bei einer Unterbrechung der Versorgungsspannung, z. B. durch Netzausfall, Nothalt, betriebsmäßigem Abschalten der Antriebseinrichtung oder im Sicherungsfall, einfallen und den Motor und damit die Last bremsen oder zum Stillstand bringen.

Für den Betrieb einer Antriebseinrichtung unter einer hängenden Last sind bestimmte Sicherheitsanforderungen erforderlich. Dazu gehört beispielsweise auch die Verwendung von mechanischen Bremsen, wobei für den sicheren Betrieb eine mechanische Bremse als ausreichend angesehen wird. Nachteilig ist dabei, dass diese Bremse zwar zweikanalig elektrisch angesteuert wird, die Mechanik jedoch nur einkanalig ist. Die Bremse kann zwar in Intervallen getestet werden, ein Defekt zwischen diesen Intervallen wird aber nicht erkannt. Ein gleichzeitiger Defekt der Elektronik oder eine Unterbrechung der Versorgungsspannung der Antriebseinrichtung und der mechanischen Bremse führt dann zu einem Herabfallen der Last, da kein Gegenmoment zum Gravitationsmoment mehr aufgebracht werden kann.

Um die Sicherheit weiter zu erhöhen, können Ankerkurzschlussschütze verwendet werden. Diese werden zwischen den Ausgang eines Wechselrichters, welcher zur Ansteuerung eines Motors, mit dem die hängende Last bewegt wird, verwendet wird, und den Motor geschaltet. Bei einer Unterbrechung der Versorgungsspannung oder bei einem Fehler in der Antriebselektronik fallen die Ankerkurzschlussschütze ein und schließen die Ständerwicklung des Motors kurz. Die hängende Last kann dadurch zwar nicht zum kompletten Stillstand gebracht werden, bewegt sich in Abhängigkeit von der Übersetzung des Motors aber nur noch mit geringer Geschwindigkeit. Solche Ankerkurzschlussschütze sind jedoch kostenintensiv, benötigen Bauvolumen im Schaltschrank, sind verschleißbehaftet und werden daher kaum noch eingesetzt.

Eine weitere Möglichkeit zum Bremsen einer hängenden Last ist der sogenannte elektronische Ankerkurzschluss. Dieser ist aus der DE 100 59 173 C1 bekannt und kommt ohne umfangreiche zusätzliche Bauteile aus. Bei einem elektronischen Ankerkurzschluss werden bei einem Wechselrichter zur Ansteuerung des Motors, mit Transistoren in einer Brückenschaltung, die Transistoren des oberen Brückenzweigs (obere Transistoren) ausgeschaltet und die des unteren Brückenzweigs (untere Transistoren) werden eingeschaltet. Dadurch wird der Motor kurzgeschlossen und die hängende Last abgebremst. Bei Unterbrechung der Versorgungsspannung kann auf diese Weise jedoch keine Ankerkurzschlussbremsung durchgeführt werden, da keine Energie zum Ansteuern der Wechselrichtertransistoren verfügbar ist.

Der Erfindung liegt daher die Aufgabe zugrunde, ein Verfahren anzugeben, mit dem die oben genannten Nachteile vermieden und eine Gefährdung von Menschen und Maschinen durch Herunterfallen einer Last, die von der Antriebseinrichtung gesteuert wird, reduziert werden können.

Diese Aufgabe wird erfindungsgemäß mit den Merkmalen des Anspruchs 1 gelöst. Dazu ist bei einem Verfahren zum Betrieb einer Antriebseinrichtung, bei der ein Motor, insbesondere ein Drehstrommotor, zum Heben einer Last über einen Wechselrichter, der in einer Brückenschaltung obere und untere Transistoren umfasst, angesteuert wird, vorgesehen, dass bei einer Unterbrechung der Versorgungsspannung der Antriebseinrichtung der Motor durch eine Bewegung der Last gedreht wird, wobei eine Rückspeisespannung erzeugt wird, welche in die Antriebseinrichtung rückgespeist wird und mit der die unteren Transistoren eingeschaltet werden, wobei beim Einschalten der unteren Transistoren ein Ankerkurzschluss ausgelöst wird.

Zur Ausführung des Verfahrens ist eine Vorrichtung vorgesehen, mit der die genannte Aufgabe erfindungsgemäß durch die Merkmale des Anspruchs 8 gelöst wird.

Der Vorteil der Erfindung besteht darin, dass eine hängende Last auch dann durch einen Ankerkurzschluss abgebremst wird, wenn die Antriebseinrichtung nicht mehr von extern mit Energie versorgt wird, so dass der Ankerkurzschluss nicht über diesen Weg ausgelöst werden kann, und andere Bremsmöglichkeiten, z. B. durch eine mechanische Bremse, nicht gegeben sind. Durch die Bewegung der Last aufgrund des Gravitationsmoments, zu dem bei unterbrochener Versorgungsspannung kein Gegenmoment mehr erzeugt werden kann, dreht sich der Motor und wirkt wie ein elektrischer Generator, mit dessen erzeugter Spannung durch Rückspeisung dann eine Energieversorgung zum Auslösen des Ankerkurzschlusses möglich ist. Durch den Ankerkurzschluss wird die Last abgebremst und so die Gefährdung, die durch die Bewegung der Last entsteht, durch eben diese Bewegung wieder reduziert. Dazu ist zudem kein zusätzlicher Aktor, wie beispielsweise Relais, Leistungstransistoren, Dioden oder Thyristoren, notwendig, so dass Materialkosten und Ausfälle durch fehlerhafte oder defekte Bauteile reduziert werden. Es werden nur einfache und kostengünstige elektronische Schaltungen eingesetzt, eine Verwendung von Prozessoren oder Software ist nicht erforderlich.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt wird als Rückspeisespannung eine dreiphasige Wechselspannung gleichgerichtet und in einen Zwischenkreis der Antriebseinrichtung rückgespeist und einem darin angeordneten Hochsetzsteller zum Einschalten der unteren Transistoren zugeführt. Durch den Hochsetzsteller wird die Rückspeisespannung erhöht, um die zum Einschalten der unteren Transistoren benötigte Spannung bereitzustellen. Dadurch kann bereits bei geringfügiger Rückspeisespannung und somit innerhalb einer möglichst kurzen Zeitspanne nach der Unterbrechung der externen Versorgungsspannung eine Ansteuerung und Einschaltung der unteren Transistoren erfolgen, sobald eine dazu ausreichende Spannung vorhanden ist.

Weiter bevorzugt werden die unteren Transistoren eingeschaltet, wenn eine Ausgangsspannung des Hochsetzstellers - Hochsetzstellerausgangsspannung - einen vorgegebenen Grenzwert überschreitet. Dadurch wird sichergestellt, dass eine ausreichende Spannung zum Einschalten der Transistoren verfügbar ist.

Wenn zum Halten der Last eine mechanische Bremse vorgesehen ist und ein Ankerkurzschluss bei Ausfall dieser Bremse und Unterbrechung der Versorgungsspannung der Antriebseinrichtung ausgelöst wird, wird auch bei defekter mechanischer Bremse ein ungebremstes Herunterfallen der Last verhindert. Dadurch kann z. B. auch auf den Einsatz einer zweiten mechanischen Bremse als zusätzliche Sicherheitsmaßnahme verzichtet werden.

Bei einem Verfahren zum Betrieb der Antriebseinrichtung kann weiterhin vorgesehen sein, dass bei Auftreten eines Fehlers in der Antriebseinrichtung oder bei Anstehen eines Nothaltesignals mindestens eines der die oberen oder unteren Transistoren ansteuernden, externen Spannungssignale abgeschaltet wird, wobei durch eine Spannung in einem Zwischenkreis die unteren Transistoren zur Auslösung eines Ankerkurzschlusses eingeschaltet werden. Dadurch könne die unteren Transistoren auch dann von der im Zwischenkreis vorhandenen Spannung eingeschaltet werden, wenn die externen Spannungssignale zur Ansteuerung der oberen und unteren Transistoren abgeschaltet sind. Als externe Spannungssignale werden die Spannungssignale bezeichnet, die nicht über eine Spannung des Zwischenkreises erzeugt werden, sondern über die Versorgungsspannung der Antriebseinrichtung.

Wenn nur eines der externen Spannungssignale zur Ansteuerung der oberen oder unteren Transistoren abgeschaltet wird und ein Ankerkurzschluss mittels der Spannung des Zwischenkreises und/oder einer Ansteuerung der unteren bzw. oberen Transistoren über Transistoransteuersignale durchgeführt wird, ergibt sich ein Abbremsen der Last parallel über einen zweikanalig ausgelösten Ankerkurzschluss. Wird die Spannung im Zwischenkreis beispielsweise zu schwach, um ein Einschalten der unteren Transistoren zu bewirken, kann dies durch das externe Spannungssignal erfolgen, d. h. die Last muss nicht erst weiter fallen, damit vom Motor eine höhere Spannung generiert und dem Zwischenkreis zugeführt wird. Umgekehrt ist auch bei einem Ausfall der Versorgungsspannung, die ein Abschalten der externen Spannungssignale bewirkt, weiterhin über die vom Motor generierte Spannung, die in den Zwischenkreis rückgespeist wird, ein Einschalten der unteren Transistoren und damit ein Auslösen eines Ankerkurzschlusses zum Abbremsen der Last möglich.

Bevorzugt wird gleichzeitig mit dem Ankerkurzschluss eine mechanische Bremse aktiviert. Dadurch lässt sich der Motor bestmöglich stillsetzen und ein Fallen der Last wird verhindert.

Bevorzugt ist der Motor ein Servomotor, insbesondere ein Synchronmotor. Bei der Verwendung eines Servomotors ergeben sich beim Fallen der Last Sinkgeschwindigkeiten, die eine besonders geringe Gefährdung für Mensch und Maschine darstellen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

### Es zeigen

- FIG 1: ein Schaltbild einer Antriebseinrichtung zum Heben einer Last zur Ausführung einer Ankerkurzschlussbremsung nach dem Stand der Technik und
- FIG 2: einen Ausschnitt eines Schaltbilds einer Antriebseinrichtung zur Ausführung einer Ankerkurzschlussbremsung mittels rückgespeister Generatorspannung des Motors als ein Ausführungsbeispiel der Erfindung.

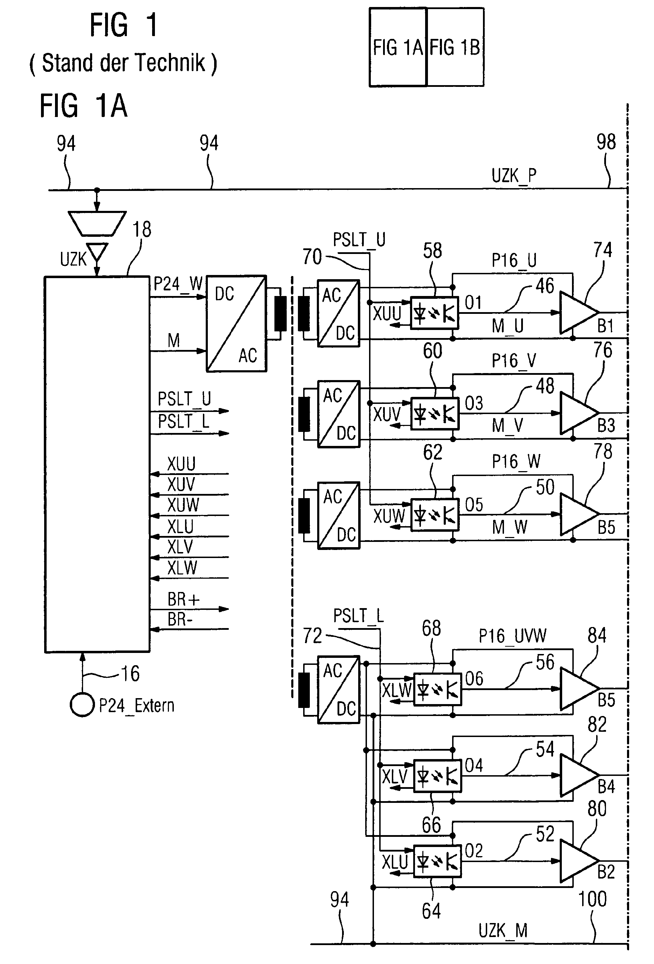

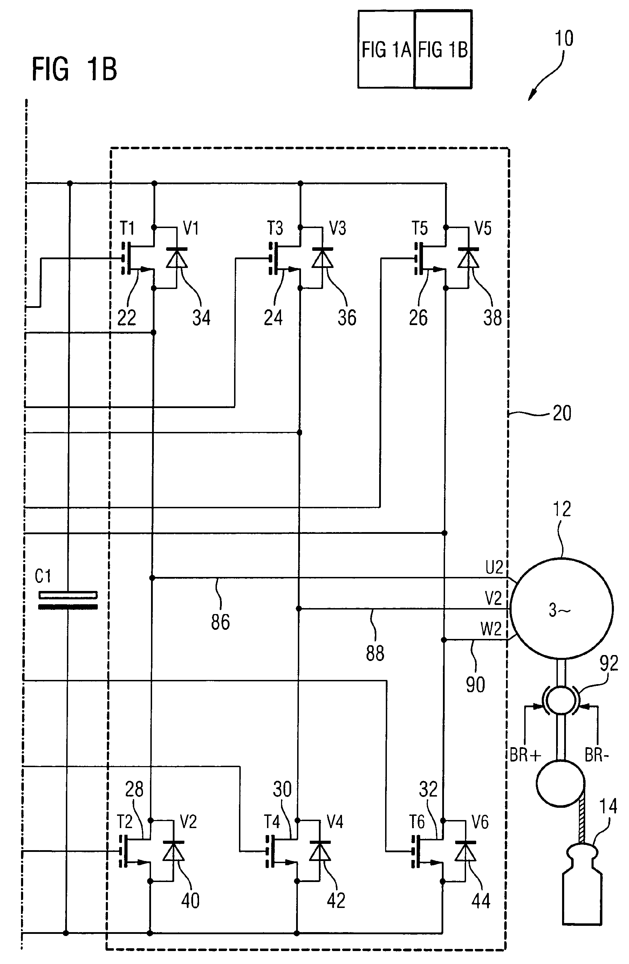

FIG 1 zeigt als Beispiel für eine nach dem Stand der Technik verwendete Antriebseinrichtung eine Antriebseinrichtung 10 mit einem Motor 12, welcher als Drehstrommotor ausgestaltet ist, zum Heben einer Last 14. Der Antrieb des Motors 12 erfolgt über eine externe Versorgungsspannung 16 und eine Antriebsregelung 18. Über die Antriebsregelung 18 wird dazu ein Wechselrichter 20 angesteuert, der in einer Brückenschaltung einen oberen Brückenzweig mit im Weiteren als obere Transistoren 22, 24, 26 und einen unteren Brückenzweig mit im Weiteren als untere Transistoren 28, 30, 32 bezeichneten Transistoren umfasst. Den oberen und unteren Transistoren 22-32 sind jeweils obere und untere Inversdioden 34, 36, 38; 40, 42, 44 zugeordnet. Zur Ansteuerung der Transistoren 22-32 werden von der Antriebsregelung 18 Transistoransteuersignale 46, 48, 50, 52, 54, 56 erzeugt. Zur Potentialtrennung oder sicheren elektrischen Trennung sind Optokoppler 58, 60, 62, 64, 66, 68 vorgesehen. Ein von der Antriebsregelung 18 generiertes erstes externes Spannungssignal 70 dient zur Versorgung der oberen Optokoppler 58, 60, 62 und zum Ansteuern der oberen Transistoren 22-26 und ein zweites externes Spannungssignal 72 dient zur Versorgung der unteren Optokoppler 64, 66, 68 und zum Ansteuern der unteren Transistoren 28-32. Bei Auftreten eines Fehlers oder wenn eine Sicherheitsfunktion der Antriebseinrichtung 10 ausgelöst wird, werden diese beiden externen Spannungssignale 70, 72 getrennt voneinander abgeschaltet. Über die Antriebsregelung 18 wird eine Spannung bereitgestellt, mit der die Transistoren 22-32 über Signalverstärker 74, 76, 78, 80, 82, 84 angesteuert und/oder eingeschaltet werden.

Mit der in FIG 1 gezeigten Schaltung kann, wenn die Last 14 abgebremst werden muss, z. B. bei Auftreten eines Fehlers, ein elektronischer Ankerkurzschluss durchgeführt werden, der eine Spannungsversorgung der Antriebseinrichtung 10 voraussetzt. Der elektronische Ankerkurzschluss wird z. B. dadurch ausgelöst, dass die oberen Transistoren 22-26 abgeschaltet und damit gesperrt werden. Dies geschieht durch Abschalten des ersten externen Spannungssignals 70. Die unteren Transistoren 28-32 werden über das zweite externe Spannungssignal 72 eingeschaltet. Der Motor 12, der mit einer dreiphasigen Wechselspannung angesteuert wird, wird dann über eine erste, zweite und dritte Phase 86, 88, 90 kurzgeschlossen.

Nach dem Stand der Technik ist eine Ankerkurzschlussbremsung nicht möglich, wenn die Versorgungsspannung 16 unterbrochen wird oder ist. In diesem Fall werden das zur Ansteuerung der Transistoren 22-32 des oberen und unteren Brückenzweigs des Wechselrichters benötigte erste und zweite externe Spannungssignal 70, 72 abgeschaltet, so dass alle Transistoren 22-32 gesperrt werden. Ein für den Ankerkurzschluss erforderliches Durchschalten der oberen oder unteren Transistoren 22-26; 28-32 ist daher nicht mehr möglich.

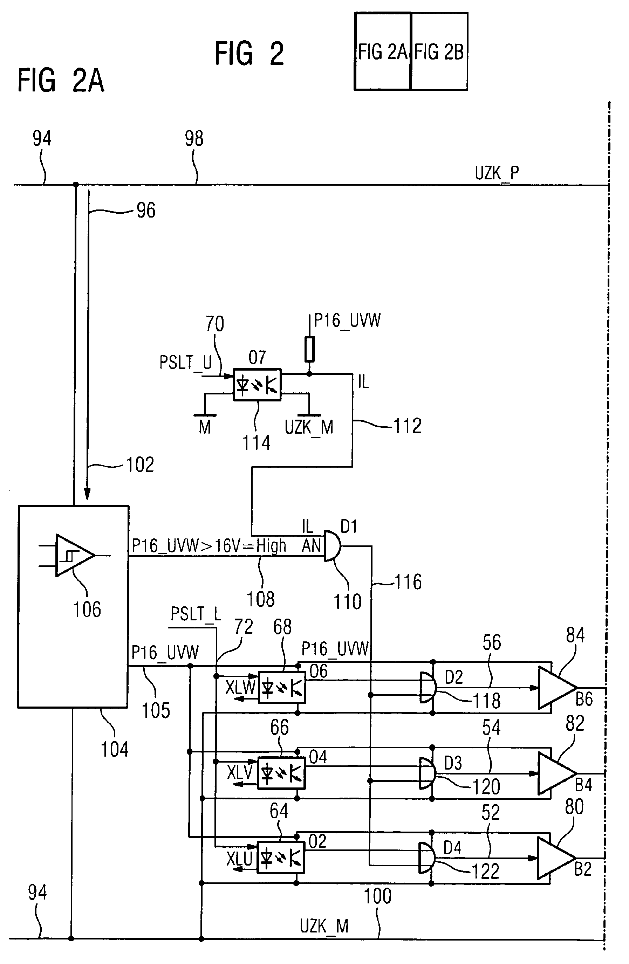

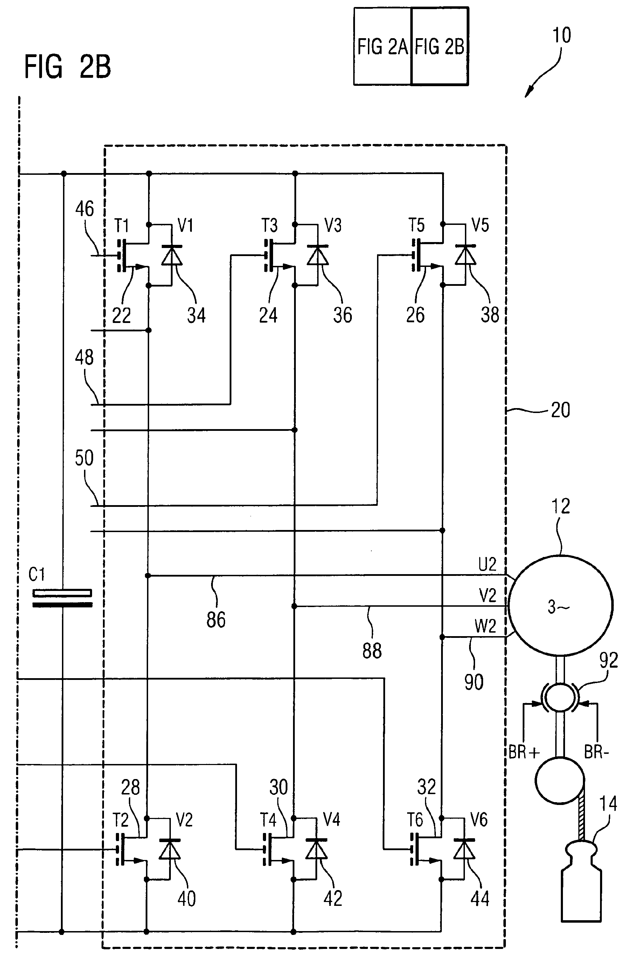

FIG 2 zeigt nun einen Ausschnitt eines Schaltbilds für ein Ausführungsbeispiel der Antriebseinrichtung 10 nach der Erfindung, mit der ein Ankerkurzschluss auch bei Unterbrechung der Versorgungsspannung 16 (FIG 1) ausgelöst wird. Schaltungskomponenten, die dem oben beschriebenen Stand der Technik entsprechen und unverändert bleiben, sind in FIG 2 nicht gezeigt. Die Antriebseinrichtung 10 befindet sich in einem Zustand, in dem die Versorgungsspannung 16 unterbrochen ist, d. h. die Versorgungsspannung 16 beträgt Null Volt. Die oberen und unteren Transistoren 22-32 sind daher ausgeschaltet, da sie über die externen Spannungssignale 70, 72 der Antriebsregelung 18 (FIG 1) nicht mehr angesteuert werden. Die Antriebseinrichtung 10 umfasst eine mechanische Bremse 92, die die Last 14 hält. Eine Spannung in einem Zwischenkreis 94 - Zwischenkreisspannung 96 - der Antriebseinrichtung 10, bei dem ein Pluszweig 98 mit den oberen Transistoren 22-26 und ein Minuszweig 100 den unteren Transistoren 28-32 verbunden ist, ist ebenfalls auf Null Volt herabgesunken.

Ein Ausfall der mechanischen Bremse 92 verursacht nun eine Bewegung der Last 14 nach unten, da auf sie eine Gravitationskraft wirkt. Dadurch beginnt der Motor 12 sich zu drehen und wirkt wie ein elektrischer Generator. Dabei wird eine dreiphasige Wechselspannung erzeugt und dem Wechselrichter 20 zugeführt, in dem sie über die Inversdioden 34-44 gleichgerichtet und als Rückspeisespannung 102 der Antriebseinrichtung 10 über den Pluszweig 98 des Zwischenkreises 94 zugeführt wird.

In den Zwischenkreis 94 ist ein Hochsetzsteller 104 geschaltet, dem die Rückspeisespannung 102 zugeführt wird. Dieser erhöht die Rückspeisespannung 102 und generiert eine Ausgangsspannung des Hochsetzstellers 104 - Hochsetzstellerausgangsspannung 105 -, die zum Einschalten der unteren Transistoren 28-32 nutzbar ist. Dazu wird beispielsweise eine Spannung von 12 Volt benötigt. Die Rückspeisespannung 102 oder eine von der Rückspeisespannung 102 abhängige Spannung, z. B. die Hochsetzstellerausgangsspannung 105, wird mit einem vom Hochsetzsteller 104 umfassten Komparator 106 beobachtet. Wenn die Rückspeisespannung 102 bzw. die Hochsetzstellerausgangsspannung 105 einen vorgegebenen Grenzwert, z. B. 16 Volt, überschreitet, wird ein erstes Signal 108 erzeugt, welches an ein UND-Gatter 110 gesendet wird. Für die Verknüpfung über das UND-Gatter 110 ist ein zweites Signal 112 notwendig, welches von einem zusätzlichen Optokoppler 114 gesendet wird. Dieser meldet eine Impulslöschung, die aufgrund der unterbrochenen Versorgungsspannung 16 (FIG 1) erfolgt, wobei die oberen Transistoren 22-26 ausgeschaltet wurden, da das erste externe Spannungssignal 70 zur Ansteuerung der oberen Optokoppler 58-62 (FIG 1) und damit der oberen Transistoren 22-26 sowie des zusätzlichen Optokopplers 114 abgeschaltet ist. Stehen sowohl das erste Signal 108 vom Hochsetzsteller 104 als auch das zweite Signal 112 vom zusätzlichen Optokoppler 114 an, wird ein Signal zur Ansteuerung einer Verknüpfungslogik - Ansteuersignal 116 - durchgelassen. Die Verknüpfungslogik umfasst ODER-Gatter 118, 120, 122, die bei Anstehen des Ansteuersignals 116 geöffnet werden und die Hochsetzstellerausgangsspannung 105 wird über die Signalverstärker 80-84 den unteren Transistoren 28-32 zugeführt, so dass diese eingeschaltet werden. Somit wird ein Ankerkurzschluss ausgelöst. Der Motor 12 und damit die Last 14 werden abgebremst, da ein Drehmoment erzeugt wird, das dem Gravitationsmoment entgegenwirkt. Das Drehmoment erhöht sich drehzahlproportional, wenn man einen Ständerstreuspannungsabfall des Motors 12 vernachlässigt, entsprechend der Daten des Motors 12, bis sich ein Gleichgewicht zwischen Gravitationsmoment und Drehmoment eingestellt hat. Ab diesem Zeitpunkt fällt die Last 14 mit konstanter Geschwindigkeit. Während dieses Vorgangs wird der Ankerkurzschluss immer wieder kurzzeitig aufgehoben, wenn die Rückspeisespannung 102 so weit abgesunken ist, das die unteren Transistoren 28-32 nicht mehr angesteuert werden können und abgeschaltet werden. Dann beschleunigt sich die Last 14 wieder, wodurch sich die Rückspeisespannung 102 wiederum erhöht und die Energie für die Transistoransteuerung bereitstellt. Die Zeitspanne, in der die Last 14 ungebremst fällt, ist aber so kurz, dass die Wirkung des Ankerkurzschlusses nur unwesentlich vermindert wird.

Des Weiteren kann mit Antriebseinrichtung 10 nach FIG 2 auch ein Ankerkurzschluss durchgeführt werden, wenn ein Fehler in der Antriebseinrichtung 10 auftritt oder ein Nothaltesignal ansteht. Dann wird mindestens eines der die oberen oder unteren Transistoren 22-32 ansteuernden, externen Spannungssignale 70, 72 abgeschaltet, so dass die entsprechenden Transistoren 22-32 gesperrt werden. Da aber noch eine Zwischenkreisspannung 96 vorhanden ist, können die unteren Transistoren 28-32 durch diese eingeschaltet werden, so dass ein Ankerkurzschluss ausgelöst wird. Wenn nur eines der externen Spannungssignale 70, 72 zur Ansteuerung der oberen oder unteren Transistoren 22-26; 28-32 abgeschaltet wird, kann der Ankerkurzschluss einerseits mittels der Zwischenkreisspannung 96 und andererseits auch über eine Ansteuerung der unteren bzw. oberen Transistoren 28-32; 22-26 erfolgen. Da eines der externen Spannungssignale 70, 72, z. B. das Spannungssignal 72 zum Ansteuern der unteren Transistoren 28-32, nicht abgeschaltet wird, können die unteren Optokoppler 64-68 angesteuert werden und senden Transistoransteuersignale 52-56 an die ODER-Gatter 118-122. Diese werden dadurch geöffnet und die unteren Transistoren 28-32 eingeschaltet. Eine Ankerkurzschlussbremsung ist somit zweikanalig durchführbar. Die mechanische Bremse 92 kann gleichzeitig mit dem Ankerkurzschluss betätigt werden, um den Motor 12 schnellstmöglich still zu setzen. Der Motor 12 kann aber auch erst nur mit der Ankerkurzschlussbremsung abgebremst werden und die mechanische Bremse 92 erst dann aktiviert werden, wenn eine bestimmte Drehzahl des Motors 12 erreicht wird.

Bei der in FIG 2 gezeigten Antriebseinrichtung 10 wird als Motor 12 vorzugsweise ein Servomotor, welcher insbesondere ein Synchronmotor ist, eingesetzt. Bei Versuchen und Berechnungen mit einem Servomotor haben sich Sinkgeschwindigkeiten für die Last 14 ergeben, die nur eine sehr geringe Gefährdung für Mensch und Maschine darstellen.

Damit lässt sich die Erfindung kurz wie folgt darstellen: Es wird ein Verfahren zum Betrieb einer Antriebseinrichtung 10 und eine nach dem Verfahren arbeitende Antriebseinrichtung 10 angegeben, wobei ein Motor 12, insbesondere ein Drehstrommotor, zum Heben einer Last 14 über einen Wechselrichter 20, der in einer Brückenschaltung obere und untere Transistoren 22-32 umfasst, angesteuert wird, wobei vorgesehen ist, dass bei einer Unterbrechung der Versorgungsspannung der Antriebseinrichtung 10 der Motor 12 durch eine Bewegung der Last gedreht wird, wobei eine Rückspeisespannung 102 erzeugt wird, welche in die Antriebseinrichtung 10 rückgespeist wird und mit der die unteren Transistoren 28-32 eingeschaltet werden, wobei beim Einschalten der unteren Transistoren 28-32 ein Ankerkurzschluss ausgelöst wird.

## Patentansprüche

1. Verfahren zum Betrieb einer Antriebseinrichtung (10), wobei ein Motor (12), insbesondere Drehstrommotor, zum Heben einer Last (14) über einen Wechselrichter (20), der in einer Brückenschaltung obere und untere Transistoren (22, 24, 26; 28, 30, 32) umfasst, angesteuert wird,
**dadurch gekennzeichnet, dass**
bei einer Unterbrechung der Versorgungsspannung der Antriebseinrichtung (10) der Motor (12) durch eine Bewegung der Last (14) gedreht wird, wobei eine Rückspeisespannung (102) erzeugt wird, welche in die Antriebseinrichtung (10) rückgespeist wird und mit der die unteren Transistoren (28, 30, 32) eingeschaltet werden, wobei beim Einschalten der unteren Transistoren (28, 30, 32) ein Ankerkurzschluss ausgelöst wird.

2. Verfahren nach Anspruch 1,
wobei als Rückspeisespannung (102) eine dreiphasige Wechselspannung gleichgerichtet und in einen Zwischenkreis (94) der Antriebseinrichtung (10) rückgespeist und einem darin angeordneten Hochsetzsteller (104) zum Einschalten der unteren Transistoren (28, 30, 32) zugeführt wird.

3. Verfahren nach Anspruch 2,
wobei die unteren Transistoren (28, 30, 32) eingeschaltet werden, wenn eine Ausgangsspannung des Hochsetzstellers (104)
- Hochsetzstellerausgangsspannung (105) - einen vorgegebenen Grenzwert überschreitet.

4. Verfahren nach einem der vorangehenden Ansprüche,
wobei zum Halten der Last (14) eine mechanische Bremse (92) vorgesehen ist und wobei bei Ausfall der mechanischen Bremse (92) und einer Unterbrechung der Versorgungsspannung der Antriebseinrichtung (10) ein Ankerkurzschluss ausgelöst wird.

5. Verfahren zum Betrieb einer Antriebseinrichtung (10) nach dem Oberbegriff des Anspruchs 1,
**dadurch gekennzeichnete dass**
bei Auftreten eines Fehlers in der Antriebseinrichtung (10) oder bei Anstehen eines Nothaltesignals mindestens eines der die oberen oder unteren Transistoren (22, 24, 26; 28, 30, 32) ansteuernden, externen Spannungssignale (70, 72) abgeschaltet wird, wobei durch eine Spannung in einem Zwischenkreis (94) - Zwischenkreisspannung (96) - die unteren Transistoren (28, 30, 32) zur Auslösung eines Ankerkurzschlusses eingeschaltet werden.

6. Verfahren nach Anspruch 5,
wobei nur eines der externen Spannungssignale (70, 72) zur Ansteuerung der oberen oder unteren Transistoren (22, 24, 26; 28, 30, 32) abgeschaltet wird und ein Ankerkurzschluss mittels der Zwischenkreisspannung (96) und/oder einer Ansteuerung der unteren bzw. oberen Transistoren (28, 30, 32; 22, 24, 26) über Transistoransteuersignale (52, 54, 56; 46, 48, 50) durchgeführt wird.

7. Verfahren nach Anspruch 6,
wobei gleichzeitig mit dem Ankerkurzschluss eine mechanische Bremse (92) aktiviert wird.

8. Antriebseinrichtung (10) für einen eine Last (14) hebenden Motor (12), insbesondere Drehstrommotor, über einen Wechselrichter (20), wobei der Wechselrichter (20) obere und untere Transistoren (22, 24, 26; 28, 30, 32) in Brückenschaltung aufweist,
**dadurch gekennzeichnet, dass**
bei einer Unterbrechung der Versorgungsspannung der Antriebseinrichtung (10) unter Einfluss einer sich bewegenden Last (14) eine Rückspeisespannung (102) generierbar ist, die in die Antriebseinrichtung (10) rückspeisbar ist und mit der die unteren Transistoren (28, 30, 32) für eine Ankerkurzschlussbremsung einschaltbar sind.

9. Antriebseinrichtung (10) nach Anspruch 8,
wobei mit einem in einem Zwischenkreis (94) angeordneten Hochsetzsteller (104) eine zum Einschalten der unteren Transistoren (28, 30, 32) nutzbare Spannung erzeugbar ist.

10. Antriebseinrichtung (10) nach Anspruch 8 oder 9,
mit einem vom Hochsetzsteller (104) umfassten Komparator (106) zur Grenzwertüberwachung der Rückspeisespannung (102) oder einer von der Rückspeisespannung (102) abhängigen Spannung, wobei, wenn die Rückspeisespannung (102) bzw. die von der Rückspeisespannung (102) abhängige Spannung einen vorgegebenen Grenzwert überschreitet, ein Ansteuersignal (116) zur Ansteuerung der unteren Transistoren (28, 30, 32) generierbar ist.

11. Antriebseinrichtung (10) nach Anspruch 10,
mit einer Antriebsregelung (18) und einer Verknüpfungslogik, welche derart ausgestaltet ist, dass mit dem Ansteuersignal (116) oder einem externen Spannungssignal (70, 72), welches bei Anstehen einer Spannung mittels der Antriebsregelung (18) generierbar ist, Transistoransteuersignale (52, 54, 56) zum Einschalten der unteren Transistoren (28, 30, 32) bereitstellbar sind.

12. Antriebseinrichtung (10) nach einem der Ansprüche 8 bis 11,
wobei der Motor (12) ein Servomotor, insbesondere Synchronmotor, ist.
